# FASCICULE DE BREVET EUROPEEN

(11) **EP 3 237 900 B1**
(45) Date de publication et mention de la délivrance du brevet: **29.05.2019**
(21) Numéro de dépôt: 15820523.7
(22) Date de dépôt: 22.12.2015
(51) Int. Cl.: G01N 27/83, F17D 5/06

(54) **PROCÉDÉ DE SURVEILLANCE EN SERVICE D'ÉLÉMENTS MÉTALLIQUES D'UNE LIGNE FLEXIBLE ET NÉCESSAIRE ASSOCIÉ**
VERFAHREN ZUR ÜBERWACHUNG VON METALLELEMENTEN EINER FLEXIBLEN LEITUNG WÄHREND DES BETRIEBS UND ENTSPRECHENDES KIT
METHOD FOR MONITORING METAL ELEMENTS OF A FLEXIBLE LINE DURING OPERATION AND ASSOCIATED KIT

(30) Priorité: 23.12.2014 FR 1463292
(43) Date de publication de la demande: 01.11.2017
(73) Titulaire: Technip France, 92400 Courbevoie (FR)
(72) Inventeur: LEMBEYE, Philippe, 76380 Montigny (FR)
(74) Mandataire: Lavoix
(86) Numéro de dépôt international: PCT/EP2015/081044
(87) Numéro de publication internationale: WO 2016/102599

(56) Documents cités:
- US-A- 4 503 393
- US-A- 5 336 998
- US-A1- 2012 098 532

## Description

La présente invention concerne un procédé de surveillance en service d'éléments métalliques d'une ligne flexible telle qu'une conduite flexible, un câble ou un ombilical.

En particulier, le procédé est destiné à suivre l'intégrité des armures de traction et du système d'ancrage des armures de traction dans un embout de la ligne flexible destiné à son raccordement.

La ligne flexible est avantageusement une conduite flexible de type non liée (« unbonded » en anglais) destinée au transport d'hydrocarbures à travers une étendue d'eau, tel qu'un océan, une mer, un lac ou une rivière. En variante, la ligne flexible est un ombilical renforcé par des éléments d'armure ou encore un câble.

Une telle conduite flexible est par exemple réalisée suivant les documents normatifs API 17J (Spécification for Unbonded Flexible Pipe) et API RP 17B (Recommended Practice for Flexible Pipe) établis par l'American Petroleum Institute.

La conduite est généralement formée d'un ensemble de couches concentriques et superposées. Elle est considérée comme « non liée » au sens de la présente invention dès lors qu'au moins une des couches de la conduite est apte à se déplacer longitudinalement par rapport aux couches adjacentes lors d'une flexion de la conduite. En particulier, une conduite non liée est une conduite dépourvue de matériaux liants raccordant des couches formant la conduite.

La conduite est généralement disposée à travers une étendue d'eau, entre un ensemble de fond, destiné à recueillir le fluide exploité dans le fond de l'étendue d'eau et un ensemble de surface flottant ou fixe, destiné à collecter et à distribuer le fluide. L'ensemble de surface peut être une plateforme semi-submersible, un FPSO ou un autre ensemble flottant.

Certaines de ces conduites sont utilisées dans des conditions très sévères. Ainsi, les hydrocarbures transportés peuvent présenter une pression et une température très élevées, par exemple une pression comprise entre 500 bar et 1000 bar, et une température comprise entre 110°C et 130°C. De plus, dans le cas où la conduite est immergée à grande profondeur, celle-ci doit être capable de résister à une pression externe très élevée, par exemple de l'ordre de 250 bar si la conduite est immergée à 2500 mètres de profondeur.

Les conduites destinées aux grandes profondeurs doivent aussi résister aux très fortes tensions, couramment plusieurs dizaines de tonnes, auxquelles elles sont soumises en service et/ou lors de leur installation en mer.

En outre, dans le cas où l'ensemble de surface est flottant et mobile en fonction des conditions de mer, les conduites montantes (« risers » en anglais) reliant le fond marin à l'ensemble de surface peuvent parfois être soumises à des millions de cycles de variation de courbure. Ces conduites montantes doivent donc aussi être capables de résister durablement à des sollicitations dynamiques en fatigue.

Les embouts de connexion, qui sont particulièrement sollicités, doivent eux aussi être conçus pour résister à de telles conditions de service.

En particulier, les éléments d'ancrage des armures de traction dans l'embout de connexion supérieur des conduites montantes sont soumis à de fortes sollicitations susceptibles d'engendrer un phénomène de fatigue de ces éléments d'ancrage, voire une rupture des armures au niveau du crochet ou de la zone arrière de l'embout.

Il est donc important de pouvoir surveiller l'ancrage des armures de traction dans les embouts de connexion des conduites flexibles montantes, afin de pouvoir détecter une éventuelle rupture d'ancrage d'un ou plusieurs fils longtemps avant que ces ruptures ne se propagent et n'engendrent la destruction de l'embout. Pour résoudre ce problème, il est connu de mesurer la torsion de la conduite à proximité immédiate de l'embout de connexion, comme cela est notamment enseigné par WO2004/027310. Toutefois, cette méthode de surveillance a pour inconvénient de ne pas être suffisamment sensible pour détecter la rupture isolée d'un seul fil.

On connait aussi des méthodes de surveillance des émissions acoustiques générées par les ruptures des fils, notamment celle décrite dans FR 2 852 695. Ces méthodes sont complexes à mettre en oeuvre et présentent l'inconvénient de ne pas être capables de détecter des ruptures survenues avant la mise en place des moyens de surveillance.

EP 2 489 824 décrit une solution consistant à ajouter à l'arrière de l'embout de connexion une chambre de mesure donnant un accès direct à certain fils d'armure, ce qui permet de les instrumenter à l'aide de jauges de contrainte. Cette solution permet de mesurer en service les contraintes longitudinales dans les fils, et de détecter la rupture éventuelle grâce à ces mesures. Cette solution présente cependant l'inconvénient de ne pas pouvoir être mise en place sur un embout préexistant ne comportant aucune chambre de mesure.

WO2006/067524 décrit une méthode de surveillance dans laquelle des capteurs électromagnétiques disposés autour de la conduite sont utilisés pour évaluer les contraintes appliquées aux armures et ainsi pouvoir détecter d'éventuelles ruptures. Cette méthode est basée sur le fait que l'état de contrainte d'un matériau ferromagnétique a une influence sur les propriétés électromagnétiques du matériau. Cependant, de telles méthodes électromagnétiques d'évaluation des contraintes sont imprécises et délicates à mettre en oeuvre, car les propriétés électromagnétiques dépendent aussi d'autres paramètres, notamment de la température, de la composition chimique, de la microstructure, de la dureté, de l'écrouissage et de l'état de surface des fils, la principale difficulté consistant à isoler le paramètre que l'on cherche à mesurer des autres paramètres d'influence détectés par les capteurs.

On connaît également de WO 97/03353 une méthode de détection des casses et des fissures dans des couches métalliques de conduites flexibles par magnétisation des couches métalliques considérées, suivi du déplacement d'un détecteur de champ magnétique le long de ces couches métalliques à l'intérieur de la conduite flexible. Cette méthode est basée sur le fait que la présence d'une rupture perturbe localement le champ magnétique et que cette perturbation locale peut être détectée à l'aide de moyens de mesure du champ situés à proximité immédiate de la rupture. Cette méthode de contrôle non destructif est connue sous le nom anglais « Magnetic Flux Leakage » car le champ magnétique à tendance à sortir de la pièce, c'est-à-dire à « fuir » au droit de la rupture. Cette méthode nécessite de pouvoir positionner un détecteur de champ magnétique à proximité de la rupture, ce qui n'est pas possible dans le cas où la rupture se trouve à l'intérieur d'un embout de connexion. Les fils d'armures sont en effet noyés à mi épaisseur dans l'embout, et séparés des faces internes et externes de l'embout par une forte épaisseur d'acier. Par suite, si on déplace des moyens de mesure le long des faces internes et/ou externes de l'embout, ces moyens sont en pratique situés trop loin des fils d'armure pour détecter de façon fiable une éventuelle rupture de fil d'armure située à l'intérieur de l'embout.

Un but de l'invention est de fournir un moyen simple, fiable et non intrusif de détection en service des dégradations et des ruptures d'éléments métalliques, tels que des éléments d'armure, dans une ligne flexible.

À cet effet, l'invention a pour objet un procédé du type précité, comprenant les étapes suivantes :
- fourniture d'une ligne flexible comportant des éléments métalliques magnétisables,
- magnétisation de chaque élément métallique situé sur un premier tronçon de la ligne flexible pour engendrer un champ magnétique rémanent sur chaque élément métallique,
- montage d'un module de mesure d'un champ magnétique autour du premier tronçon, et
- détermination d'un déplacement axial de chacun des éléments métalliques à partir du champ magnétique mesuré.

Le procédé selon l'invention peut comprendre l'une ou plusieurs des caractéristiques suivantes, prise(s) isolément ou suivant toute combinaison techniquement possible :
- le procédé comprend, avant l'étape de magnétisation, une étape de démagnétisation de la ligne flexible.
- l'étape de magnétisation comprend l'enroulement d'un solénoïde autour de la ligne flexible, la disposition d'un circuit magnétique autour du solénoïde, puis la circulation d'un courant dans le solénoïde.
- lors de l'étape de magnétisation, le circuit magnétique est disposé autour du solénoïde de sorte à engendrer un seul pôle magnétique sur chaque élément métallique.
- lors de l'étape de magnétisation, le circuit magnétique est disposé autour du solénoïde de sorte à engendrer deux pôles magnétiques sur chaque élément métallique.
- le module de mesure comprend des capteurs choisi parmi des capteurs à effet Hall, des magnétodiodes et des magnétorésistances.
- les capteurs du module de mesure sont arrangés suivant un réseau matriciel couvrant 360° angulairement.
- les capteurs du module de mesure sont disposés sur une sonde, la sonde se déplaçant axialement et/ou angulairement sur la ligne flexible.
- le module de mesure comprend au moins un circuit de blindage magnétique disposé à l'extérieur des éléments magnétiques lors de l'étape de montage.
- le procédé comprend, lors de l'étape de détermination, une étape de mesure de l'évolution d'au moins une composante axiale, radiale ou circonférentielle du champ magnétique engendré le long de la ligne flexible.
- le procédé comprend une étape d'établissement d'une cartographie du champ magnétique engendré le long de la ligne flexible à un instant donné.
- le procédé comprend, lors de l'étape de détermination, une étape de comparaison du déplacement axial d'un premier élément métallique par rapport à un deuxième élément métallique.
- la ligne flexible comprend un embout relié au premier tronçon de ligne flexible, et lors de l'étape de montage, le module de mesure est fixé au voisinage de l'embout.
- les éléments métalliques sont des éléments d'armure tels que des fils d'armures.

L'invention a aussi pour objet un nécessaire de surveillance en service des éléments métalliques au niveau des embouts de lignes flexibles telles que des conduites flexibles, des câbles ou des ombilicaux, comprenant :
- un module de magnétisation de chaque élément métallique propre à être disposé de manière amovible sur un premier tronçon de la ligne flexible, le module de magnétisation étant propre à engendrer un champ magnétique rémanent sur chaque élément métallique,
- un module de mesure d'un champ magnétique propre à être disposé autour du premier tronçon, à la place du module de magnétisation, et
- un module de détermination d'un déplacement axial de l'élément métallique (3) à partir du champ magnétique mesuré.

Ainsi, le procédé de surveillance objet de la présente invention consiste à mesurer grâce à des mesures magnétiques les déplacements axiaux des éléments métalliques magnétisables pouvant survenir lorsque la conduite est en service.

Ce procédé concerne notamment le cas où ces éléments métalliques ont pour fonction de reprendre les efforts de traction exercés sur la ligne flexible, par exemple lorsque ces éléments métalliques sont des fils d'armures des couches d'armures de traction d'une conduite flexible.

Ce procédé permet de détecter indirectement des ruptures situées loin de la zone de mesure, par exemple des ruptures de fils d'armures situées à l'intérieur de l'embout de connexion alors que les mesures sont effectuées autour de la ligne flexible à l'arrière de l'embout de connexion.

Ce procédé s'applique lorsque les éléments métalliques sont magnétisables, c'est-à-dire constitués d'un métal capable de s'aimanter et de conserver une aimantation rémanente après aimantation. Ce procédé s'applique notamment lorsque les éléments métalliques sont ferromagnétiques, par exemple réalisés en acier au carbone.

Ainsi, le présent procédé repose sur l'idée de mesurer les déplacements axiaux des éléments métalliques pour en tirer une information sur leur intégrité.

En effet, lorsque la ligne flexible est en service et subit de fortes variations de tension, par exemple sous l'effet de la houle et des mouvements de l'ensemble de surface flottant, les éléments métalliques se déplacent axialement en fonction du niveau de tension, ces déplacements pouvant avoir une amplitude importante pouvant atteindre plusieurs millimètres, par exemple 3 millimètres. Or, dans le cas où l'un de ces éléments est rompu, l'élément rompu ne peut plus reprendre les efforts de tension et ses déplacements axiaux sont différents de ceux des éléments non rompus qui continuent à reprendre les efforts de tension. Par conséquent, en déterminant le déplacement axial de chacun des éléments métalliques, et en comparant entre eux les déplacements axiaux ainsi déterminés, il est possible d'identifier la présence éventuelle d'éléments rompus.

Une autre caractéristique de la présente invention concerne les moyens utilisés pour déterminer le déplacement axial de chacun des éléments métalliques. Ainsi, l'invention exploite le fait que les éléments métalliques sont généralement réalisés en acier ferromagnétique, c'est-à-dire en matériau magnétisable. Chaque élément métallique peut donc être magnétisé de façon à engendrer ensuite un champ magnétique rémanent, c'est-à-dire à se comporter localement comme un aimant permanent qui aurait été intégré dans l'élément métallique à une position fixe par rapport à ce dernier. Une fois cette étape de magnétisation effectuée, le déplacement axial de chaque élément métallique est équivalent du point de vue magnétique au déplacement axial d'un aimant permanent qui aurait été intégré dans l'élément métallique. Le module de mesure du champ magnétique permet de mesurer le champ magnétique rémanent généré par chaque élément métallique, ce qui permet donc de déterminer le déplacement axial de chaque élément métallique.

Les moyens de magnétisation et de mesure du champ magnétique présentent l'avantage de pouvoir être opérés sans contact avec les éléments métalliques et à travers la gaine externe de la ligne flexible, comme cela sera exposé plus loin.

L'invention sera mieux comprise à la lecture de la description qui va suivre, donnée uniquement à titre d'exemple, et faite en se référant aux dessins annexés, sur lesquels :
- la figure 1 est une vue en perspective partiellement écorchée d'un tronçon central d'une première conduite flexible surveillée à l'aide d'un procédé selon l'invention ;
- la figure 2 est une vue, prise en coupe suivant un plan axial médian, d'un embout de la conduite de la figure 1 ;
- la figure 3 est une vue, prise en coupe suivant un plan axial médian, de l'embout de la figure 2, lors d'une première étape du procédé selon l'invention mettant en oeuvre une démagnétisation des éléments d'armures de la conduite ;
- la figure 4 est une vue analogue à la figure 3, illustrant une étape de magnétisation de la conduite ;
- la figure 5 est une vue analogue à la figure 4, illustrant une variante d'étape de magnétisation de la conduite ;
- la figure 6 est une vue analogue à la figure 5, illustrant la conduite, après l'étape de magnétisation,
- la figure 7 est une vue analogue à la figure 6, illustrant une étape de mesure de l'intégrité de la conduite par des capteurs de mesure du champ magnétique de la conduite,
- la figure 8 est une vue partielle prise en coupe de la conduite de la figure 6, illustrant les lignes de champ magnétique permanent engendrées par les éléments d'armure de la conduite, et
- la figure 9 est un graphique représentant l'évolution du champ magnétique d'un point donnée de la conduite en fonction du déplacement d'un élément métallique sur la conduite.

Dans tout ce qui suit, les termes « extérieur » et « intérieur » s'entendent généralement de manière radiale par rapport à un axe X-X' de la conduite, le terme « extérieur » s'entendant comme relativement plus éloigné radialement de l'axe X-X' et le terme « intérieur » s'étendant comme relativement plus proche radialement de l'axe X-X' de la conduite.

Les termes « avant » et « arrière » s'entendent de manière axiale par rapport à un axe X-X' de la conduite, le terme « avant » s'entendant comme relativement plus éloigné du milieu de la conduite et plus proche d'une de ses extrémités, le terme « arrière » s'entendant comme relativement plus proche du milieu de la conduite et plus éloigné d'une de ses extrémités. Le milieu de la conduite est le point de la conduite situé à égale distance des deux extrémités de cette dernière.

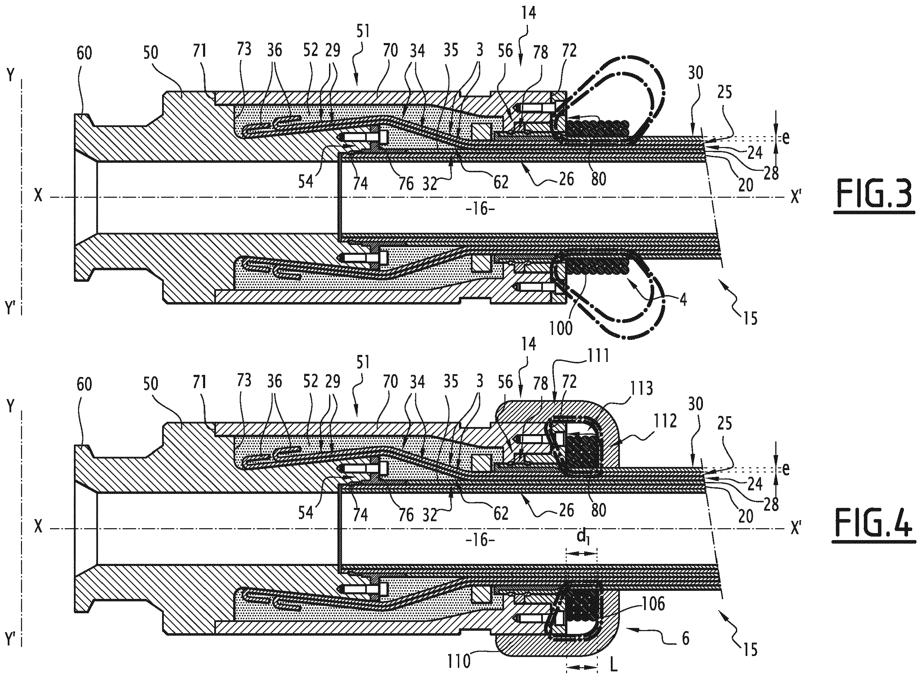

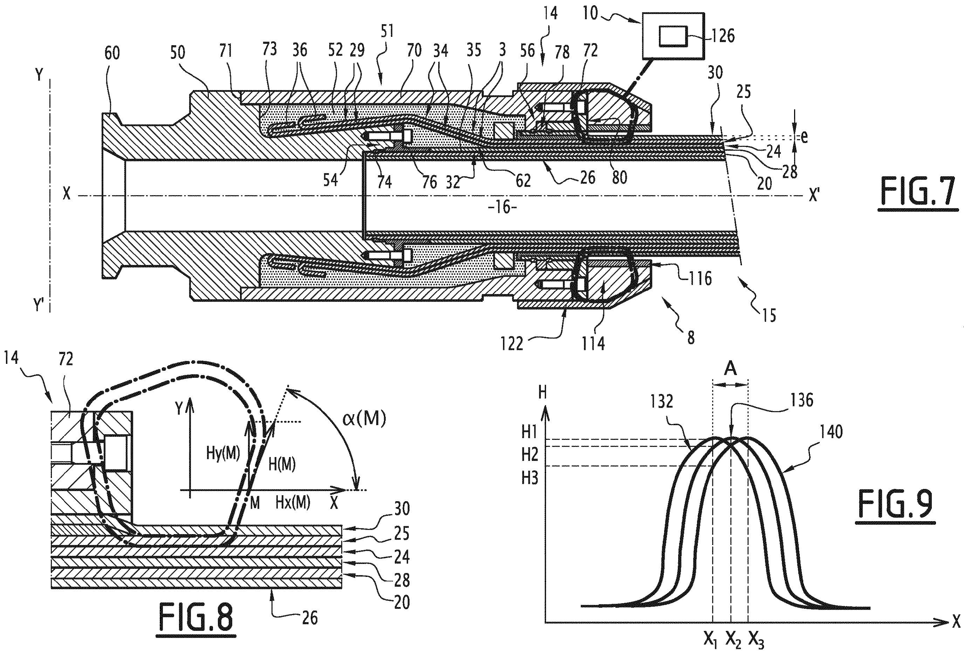

Un nécessaire de surveillance destiné au suivi d'une ligne flexible 2 comportant au moins un élément métallique 3, comprend un module de démagnétisation 4 de la ligne flexible 2, visible sur la figure 3, un appareil (non représenté) de mesure du champ magnétique de la ligne flexible 2, un module de magnétisation 6 de la ligne flexible 2 visible sur la figure 4, un module de mesure 8 du champ magnétique le long de la ligne flexible 2 et un module de traitement 10 du champ magnétique mesuré, visibles sur la figure 7.

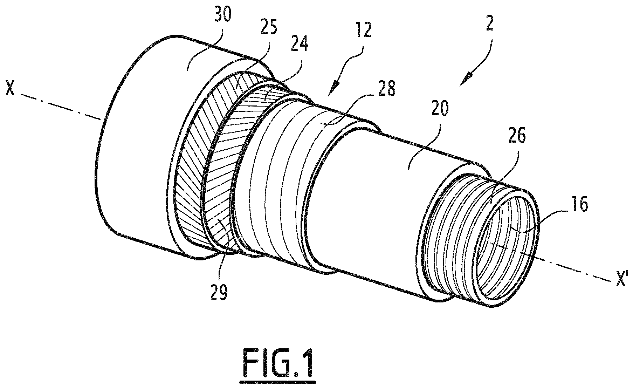

Un premier exemple de ligne flexible 2 destinée à être surveillée par un procédé selon l'invention est illustrée partiellement par la figure 1.

Dans l'exemple décrit ci-après, la ligne flexible 2 est une conduite flexible. En variante, la ligne flexible 2 est un câble ou un ombilical.

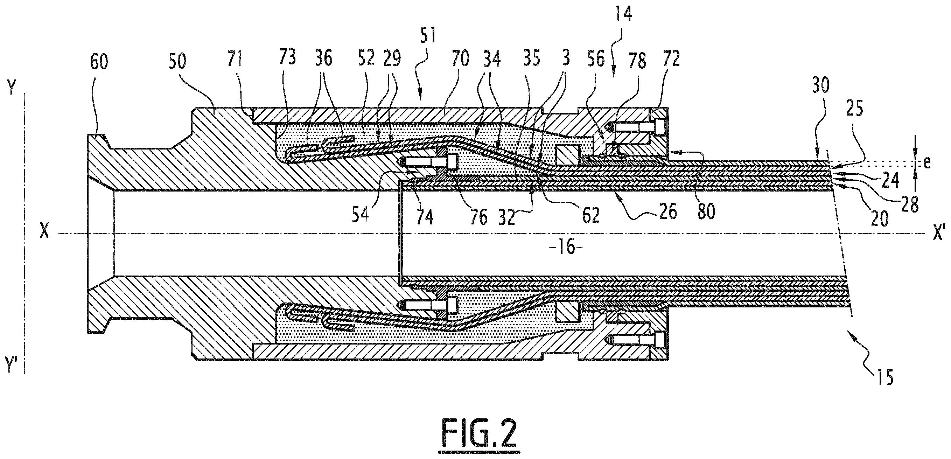

La conduite flexible 2 comporte un tronçon central 12 illustré en partie sur la figure 1. Elle comporte, à chacune des extrémités axiales du tronçon central 12, un embout d'extrémité 14 dont les parties pertinentes sont représentées sur les figures 2 à 7. Sur les figures 2 à 7, outre l'embout 14, est représentée une partie du tronçon central 12 adjacente à l'embout 14, qui sera désignée par la suite par premier tronçon 15.

En référence à la figure 1, la conduite 2 délimite un passage central 16 de circulation d'un fluide, avantageusement d'un fluide pétrolier. Le passage central 16 s'étend suivant un axe X-X', entre l'extrémité amont et l'extrémité aval de la conduite 2. Il débouche à travers les embouts 14.

Dans tout ce qui suit, on définit, également, un axe radial Y-Y' perpendiculaire à l'axe X-X' et situé dans un plan axial médian de la conduite 2, comme visible sur la figure 2.

La conduite flexible 2 est destinée à être disposée à travers une étendue d'eau (non représentée) dans une installation d'exploitation de fluide, notamment d'hydrocarbures.

L'étendue d'eau est par exemple, une mer, un lac ou un océan. La profondeur de l'étendue d'eau au droit de l'installation d'exploitation de fluide est par exemple comprise entre 500 m et 3000 m.

L'installation d'exploitation de fluide comporte un ensemble de surface notamment flottant et un ensemble de fond (non représentés) qui sont généralement raccordés entre eux par la conduite flexible 2.

La conduite flexible 2 est de préférence une conduite « non liée » (désignée par le terme anglais « unbonded »).

Au moins deux couches adjacentes de la conduite flexible 2 sont libres de se déplacer longitudinalement l'une par rapport à l'autre lors d'une flexion de la conduite.

Avantageusement, toutes les couches de la conduite flexible sont libres de se déplacer l'une par rapport à l'autre. Une telle conduite est par exemple décrite dans les documents normatifs publiés par l'American Petroleum Institute (API), API 17J, et API RP17B.

Comme illustré par la figure 1, la conduite 2 délimite une pluralité de couches concentriques autour de l'axe X-X', qui s'étendent continûment le long du tronçon central 12 jusqu'aux embouts 14 situés aux extrémités de la conduite.

La conduite 2 comporte au moins une première gaine tubulaire 20 à base de matériau polymère constituant avantageusement une gaine de pression.

La conduite 2 comporte en outre au moins une couche d'armures de traction 24, 25 disposée extérieurement par rapport à la première gaine 20 formant une gaine de pression.

Dans cet exemple, la conduite 2 comporte en outre une carcasse interne 26 disposée à l'intérieur de la gaine de pression 20, une voûte de pression 28 intercalée entre la gaine de pression 20 et la ou les couches d'armures de traction 24, 25 et une gaine externe 30, destinée à la protection de la conduite 2.

De manière connue, la gaine de pression 20 est destinée à confiner de manière étanche le fluide transporté dans le passage 16. Elle est formée en matériau polymère, par exemple à base d'un polyoléfine tel que du polyéthylène, à base d'un polyamide tel que du PA11 ou du PA12, ou à base d'un polymère fluoré tel que du polyfluorure de vinylidène (PVDF).

L'épaisseur de la gaine de pression 20 est par exemple comprise entre 5 mm et 20 mm.

La gaine de pression 20 comporte un tronçon d'extrémité 32 inséré dans l'embout 14.

La carcasse 26 est formée par exemple d'un feuillard métallique profilé, enroulé en spirale. Les spires du feuillard sont avantageusement agrafées les unes aux autres. La fonction principale de la carcasse 26 est de reprendre les efforts radiaux d'écrasement.

La carcasse 26 est ici totalement métallique.

Dans cet exemple, la carcasse 26 est disposée à l'intérieur de la gaine de pression 20. La conduite est alors désignée par le terme anglais « rough bore » en raison de la géométrie de la carcasse 26.

La carcasse 26 est propre à entrer en contact avec le fluide circulant dans la gaine de pression 20.

L'enroulement hélicoïdal du feuillard métallique profilé formant la carcasse 26 est à pas court, c'est-à-dire qu'il présente un angle d'hélice de valeur absolue proche de 90°, typiquement compris entre 75° et 90°.

La fonction principale de la voûte de pression 28 est de reprendre les efforts radiaux liés à la pression régnant à l'intérieur de la gaine de pression 20. La voûte de pression 28 est par exemple formée d'un fil profilé métallique entouré en hélice autour de la gaine 20. Le fil profilé présente généralement une géométrie complexe, notamment en forme de Z, de T, de U, de K, de X ou de I.

La voûte de pression 28 est enroulée en hélice à pas court autour de la gaine de pression 20, c'est-à-dire avec un angle d'hélice de valeur absolue proche de 90°, typiquement compris entre 75° et 90°.

La voûte de pression 28 présente une région d'extrémité 35 insérée dans l'embout 14, à l'extérieur du tronçon d'extrémité 32 de la gaine de pression 20. Le tronçon d'extrémité 32 de la gaine de pression 20 s'étend axialement vers l'avant au-delà de la région d'extrémité 35 de la voûte de pression 28.

La conduite flexible 2 comprend au moins une couche d'armures 24, 25 formée d'un enroulement hélicoïdal d'au moins un élément d'armure 29 allongé.

Dans l'exemple représenté sur la figure 2, la conduite flexible 2 comporte une pluralité de couches d'armures 24, 25, notamment une couche d'armures intérieure 24, appliquée sur la voûte de pression 28 et une couche d'armures extérieure 25 autour de laquelle est disposée la gaine extérieure 30.

Chaque couche d'armures 24, 25 comporte des éléments d'armure 29 longitudinaux enroulés à pas long autour de l'axe X-X' de la conduite.

Par « enroulé à pas long », on entend que la valeur absolue de l'angle d'hélice est inférieure à 60°, et est typiquement comprise entre 25° et 55°.

La fonction principale des couches d'armures 24, 25 est de reprendre les efforts axiaux de traction exercés sur la conduite 2, notamment ceux liés au poids pendu dans le cas d'une conduite montante,

Les éléments d'armure 29 d'une première couche 24 sont enroulés généralement suivant un angle opposé par rapport aux éléments d'armure 29 d'une deuxième couche 25. Ainsi, si l'angle d'enroulement des éléments d'armure 29 de la première couche 24 est égal à + α, α étant compris entre 25° et 55°, l'angle d'enroulement des éléments d'armure 29 de la deuxième couche d'armures 25 disposée au contact de la première couche d'armures 24 est par exemple égal à - α°.

Les éléments d'armure 29 sont par exemple formés par des fils métalliques, notamment des fils en acier ferromagnétique, ou par des rubans en matériau composite, par exemple des rubans renforcés de fibres de carbone. Dans les exemples représentés sur les figures 2 à 5, les éléments d'armure 29 sont formés par des fils métalliques en acier ferromagnétique. Les éléments d'armures 29 sont donc magnétisables, c'est-à-dire constitués d'un métal capable de s'aimanter et de conserver une aimantation rémanente après aimantation.

Comme on le verra plus bas, les éléments d'armure 29 présentent chacun un tronçon d'extrémité 34 introduit dans l'embout 14. Le tronçon d'extrémité 34 s'étend jusqu'à une extrémité libre 36 disposée dans l'embout 14. Il présente avantageusement une trajectoire pseudo-hélicoïdale d'axe X-X' dans l'embout 14, l'hélice s'enroulant sur une enveloppe conique.

Dans l'exemple représenté sur la figure 2, pour chaque couche d'armures 24, 25, les tronçons d'extrémité 34 des éléments d'armure 29 s'étendent de manière divergente à l'écart de l'axe X-X', puis convergente vers l'axe X-X' depuis un point de décollement arrière 62 vers une extrémité avant libre 36.

La gaine externe 30 est destinée à empêcher la perméation de fluide depuis l'extérieur de la conduite flexible 2 vers l'intérieur. Elle est avantageusement réalisée en matériau polymère, notamment à base d'un polyoléfine, tel que du polyéthylène, ou à base d'un polyamide, tel que du PA11 ou du PA12.

L'épaisseur e de la gaine externe 30 est par exemple comprise entre 5 mm et 15 mm.

Comme illustré par la figure 2, outre les tronçons d'extrémité 32, 34 des éléments d'armure 29, et les régions d'extrémité 33, 35, chaque embout 14 comporte une voûte d'extrémité 50 et un capot extérieur de liaison 51 faisant saillie axialement vers l'arrière à partir de la voûte 50. Le capot 51 délimite, avec la voûte d'extrémité 50, une chambre 52 de réception des tronçons d'extrémité 34 des éléments d'armure 29, et de la région d'extrémité 35 de la voûte 28.

L'embout 14 comporte, en outre, un ensemble avant 54 d'étanchéité autour de la gaine de pression 20 et un ensemble arrière 56 d'étanchéité autour de la gaine extérieure 30.

Dans cet exemple, la voûte d'extrémité 50 est destinée à raccorder la conduite 2 à un autre embout de connexion 14 ou à des équipements terminaux, avantageusement par l'intermédiaire d'une bride d'extrémité 60.

La voûte d'extrémité 50 présente un alésage central destiné à recevoir l'extrémité de la gaine de pression 20 et à permettre l'écoulement du fluide circulant à travers le passage central 16 vers l'extérieur de la conduite 2.

Le capot 51 comporte une paroi périphérique 70 tubulaire s'étendant autour de l'axe X-X'. La paroi périphérique 70 présente un bord avant 71 fixé sur la voûte d'extrémité 50, à l'écart radialement des couches d'armures 24, 25 et un bord arrière 72 s'étendant axialement vers l'arrière au-delà de la voûte d'extrémité 50.

Le capot 51 délimite la chambre 52 radialement vers l'extérieur. Une face arrière 73 de la voûte d'extrémité 50 délimite axialement la chambre 52 vers l'avant. Un matériau de remplissage remplit avantageusement la chambre 52. Le matériau de remplissage est par exemple une résine époxy.

L'ensemble avant d'étanchéité 54 est avantageusement situé à l'avant de l'embout 14, en contact avec la voûte d'extrémité 50.

De manière connue, il comporte une bague avant 74 de sertissage, destinée à venir en prise sur la gaine de pression 20, et une bride de sertissage 76.

Le serrage de la bride 76 contre la voûte 50 a pour effet de déformer radialement la bague avant 74 de sertissage, de sorte que cette dernière vienne en prise radialement sur la gaine de pression 20.

L'ensemble arrière d'étanchéité 56 est placé à l'arrière de l'ensemble avant d'étanchéité 54.

Il comporte au moins une bague arrière de sertissage 78 sertissant la gaine externe 30, et une bride arrière 80 de serrage de la bague arrière 78, fixée sur le capot 51, avantageusement au niveau du bord arrière 72 de la paroi périphérique 70.

Les éléments métalliques 3 destinés à être surveillés par le procédé selon l'invention sont les éléments d'armure 29 des couches d'armures 24, 25.

En particulier, les éléments d'armure 29 sont calés dans la chambre 52 de l'embout 14 par le matériau de remplissage et/ou par effet cabestan. Leur déplacement axial, le long de l'axe X-X' est donc normalement limité, en fonctionnement normal de la conduite. Ce déplacement présente par exemple une amplitude de l'ordre de 1 millimètre (mm) à 5 mm en fonction des variations de tension axiale.

Les variations de tension axiale sont notamment liées aux mouvements verticaux de l'ensemble de surface sous l'effet de la houle et des vagues. Lorsque l'ensemble de surface se déplace verticalement vers le haut, la tension axiale a tendance à augmenter au niveau de la partie supérieure de la conduite 2. Au contraire, lorsque l'ensemble de surface se déplace verticalement vers le bas, la tension axiale a tendance à diminuer. Lorsque la houle est importante, la tension axiale peut varier d'au moins plusieurs dizaines de tonnes au cours d'un cycle. Ces variations cycliques importantes de la tension axiale engendrent des déplacements des éléments d'armure 29, ces déplacements étant cycliques et synchrones avec les variations de tension axiale. Si un élément d'armure 29 casse ou se désolidarise du matériau de remplissage, son mouvement axial est affecté, par exemple, en étant significativement réduit ou augmenté par rapport au mouvement axial des éléments d'armure 29 restés solidaires du matériau de remplissage.

Comme visible sur la figure 3, le module de démagnétisation 4 de la ligne flexible 2 comprend une bobine de démagnétisation. La bobine est constituée, par exemple, par un câble électrique enroulé autour de la conduite flexible 2 pour former un solénoïde 100 d'axe X-X'.

Le câble électrique utilisé pour réaliser le solénoïde 100 comporte un conducteur en cuivre recouvert d'une gaine polymérique d'isolation électrique. Le conducteur en cuivre présente une forte section, typiquement 50 millimètres carrés (mm²) ou plus, de façon à pouvoir transporter un courant électrique de forte intensité, typiquement de 100 Ampères ou plus.

Le solénoïde 100 comprend plusieurs spires. Il est entendu par « spire » un circuit électrique en forme de boucle parcouru par un courant électrique.

Le solénoïde 100 est propre à recevoir un courant alternatif, par exemple un courant de fréquence 50 Hz, d'intensité décroissante.

Lorsque le solénoïde 100 est traversé par un courant, le solénoïde 100 est propre à engendrer dans son voisinage un champ magnétique H d'intensité proportionnelle au courant, et sensiblement proportionnelle au ratio entre le nombre de spires et la longueur du solénoïde 100 le long de l'axe X-X'.

En ajustant le nombre et la disposition des spires, ainsi que l'intensité du courant, il est possible de régler l'intensité minimale du champ magnétique auquel est soumis le tronçon 15 du flexible 2 situé à l'intérieur du solénoïde 100.

Le module de démagnétisation 4 est propre à appliquer aux éléments métalliques 3 situés à l'intérieur du solénoïde 100 un champ magnétique alternatif d'intensité décroissante. La valeur efficace minimale de l'intensité de ce champ magnétique au début de l'étape de démagnétisation est avantageusement supérieure à 4000 Ampères par mètre (A/m), et préférentiellement supérieure à 6000 A/m. A la fin de l'étape de démagnétisation, la valeur efficace de l'intensité de ce champ magnétique est avantageusement inférieure à 100 A/m, préférentiellement inférieure à 50 A/m. La fréquence de ce champ magnétique alternatif d'intensité décroissante est avantageusement comprise entre 50 Hz et 60 Hz. La durée totale d'application de ce champ magnétique d'intensité décroissante pendant l'étape de démagnétisation est avantageusement comprise entre 5 secondes et 20 secondes.

Le module de démagnétisation 4 est propre à être monté de manière réversible à l'extérieur de la première partie de la conduite flexible 2, pour démagnétiser des éléments métalliques 3.

En particulier, le module de démagnétisation 4 est propre à être démonté une fois la démagnétisation obtenue.

L'appareil de mesure du champ magnétique est apte à mesurer le niveau de champ rémanent à la surface de la gaine externe 30 de la conduite flexible 2 au voisinage de l'embout 14, notamment après une démagnétisation effectuée à l'aide du module 4. Il est entendu par « champ rémanent », le champ magnétique existant dans un matériau en l'absence de toute source de champ magnétique extérieure au matériau. L'appareil de mesure du champ magnétique permet notamment de vérifier la qualité de la démagnétisation des éléments métalliques 3 effectuée par le module de démagnétisation 4.

L'appareil de mesure du champ magnétique est de préférence portable.

L'appareil de mesure est propre à être monté de manière réversible à l'extérieur de la première partie de la conduite flexible 2.

L'appareil de mesure du champ magnétique comporte par exemple des capteurs à effet Hall, des magnétodiodes, ou encore des magnétorésistances.

En référence à la figure 4, le module de magnétisation 6 de la ligne flexible 2 comprend une bobine de magnétisation. Cette bobine est formée avantageusement par un câble électrique, enroulable autour de la conduite flexible 2 pour former un solénoïde 106. Le module 6 comporte, en outre, un circuit magnétique 110.

La figure 4 illustre un premier mode de réalisation du module de magnétisation 6.

Dans ce premier mode de réalisation, le câble est propre à être enroulé au niveau de l'arrière de l'embout 14 de la conduite flexible 2 de sorte que le câble soit en contact avec une surface arrière de l'embout 14. Cette surface arrière est, par exemple, définie sur la bride arrière 80 de l'ensemble arrière d'étanchéité 56 de l'embout 14.

En outre, avantageusement, la longueur L du solénoïde 106 formé par le câble, prise le long de l'axe X-X', est au moins cinq fois supérieure à l'épaisseur e de la gaine externe 30. Préférentiellement, la longueur L du solénoïde 106 est supérieure à huit fois l'épaisseur e de la gaine externe 30.

Le câble électrique utilisé pour réaliser le solénoïde 106 comporte un conducteur en cuivre recouvert d'une gaine polymérique d'isolation électrique. Le conducteur en cuivre présente une forte section, typiquement 50 mm² ou plus, de façon à pouvoir transporter un courant électrique de forte intensité. Le solénoïde 106 comprend plusieurs spires.

Le solénoïde 106 est propre à recevoir un courant de forte intensité, par exemple supérieur à 100 A. Le courant est, notamment, un courant continu, un courant redressé double alternance ou encore un courant redressé simple alternance.

Le module de magnétisation 6 est propre à appliquer aux éléments métalliques 3 situés à l'intérieur du solénoïde 106 un champ magnétique continu ou redressé d'intensité efficace avantageusement supérieure à 2000 A/m, et préférentiellement supérieure à 3000 A/m.

Lorsque le solénoïde 106 est traversé par un courant, le solénoïde 106 est propre à engendrer dans son voisinage un champ magnétique H d'intensité proportionnelle au courant, et sensiblement proportionnelle au ratio entre le nombre de spires et la longueur du solénoïde 106 le long de l'axe X-X'.

En ajustant le nombre et la disposition des spires, ainsi que l'intensité du courant, il est possible de régler l'intensité minimale du champ magnétique auquel est soumis le tronçon 15 du flexible 2 situé à l'intérieur du solénoïde 106.

Le circuit magnétique 110 est propre à être disposé autour du solénoïde 106. Le circuit magnétique 110 est donc en contact avec l'arrière de l'embout 14. En particulier, le circuit magnétique 110 est en contact avec la paroi périphérique 70 du capot 51 de l'embout 14.

Le circuit magnétique 110 est asymétrique et coaxial avec l'embout 14.

Le circuit magnétique 110 est avantageusement usiné dans un matériau métallique présentant une forte perméabilité magnétique, par exemple un acier doux à faible teneur en carbone, notamment un acier XC10, ou encore un acier en fer-silicium du type de ceux utilisés pour réaliser les transformateurs de courant.

Le circuit magnétique 110 comporte au moins deux demi-coquilles propres à être installées et cerclées autour de l'embout 14 et de la conduite flexible 2.

Le circuit magnétique 110 comporte ainsi une partie annulaire circonférentielle 111, disposée à l'avant en appui radial sur une surface périphérique extérieure du capot 51. Une telle partie annulaire circonférentielle 111 est disposée à l'avant en regard du solénoïde 106. Le circuit magnétique 110 comporte, en outre, une partie arrière transversale 112 disposée à l'arrière du solénoïde 106 en appui sur la gaine externe 30.

Le circuit magnétique 110 définit avec la gaine externe 30 à l'arrière et avec l'embout 14 à l'avant un espace annulaire 113 de réception du solénoïde.

Lorsque le solénoïde 106 est traversé par un courant, le solénoïde 106 et le circuit magnétique 110 sont propres à engendrer, sur chaque élément métallique 3, un seul pôle magnétique, situé au voisinage de l'arrière de l'embout 14. Il est entendu par « pôle magnétique » une zone dans laquelle les lignes de champ magnétiques convergent ou bien pénètrent à l'intérieur de l'élément métallique 3 ou bien sortent de l'élément métallique 3.

En outre, les pôles magnétiques de chacun des éléments métalliques 3 sont situés à la même distance d₁ de l'arrière de l'embout 14. La distance d₁ varie entre 80 mm à 150 mm selon l'épaisseur e de la gaine externe 30.

Ainsi, chaque élément métallique 3 se comporte comme un aimant permanent au niveau de son pôle magnétique.

Le bouclage magnétique s'effectue au niveau de l'embout 14.

Le circuit magnétique 110 permet d'une part d'augmenter l'intensité du champ magnétique auquel sont soumis les éléments métalliques 3, et d'autre part de positionner précisément les pôles magnétiques.

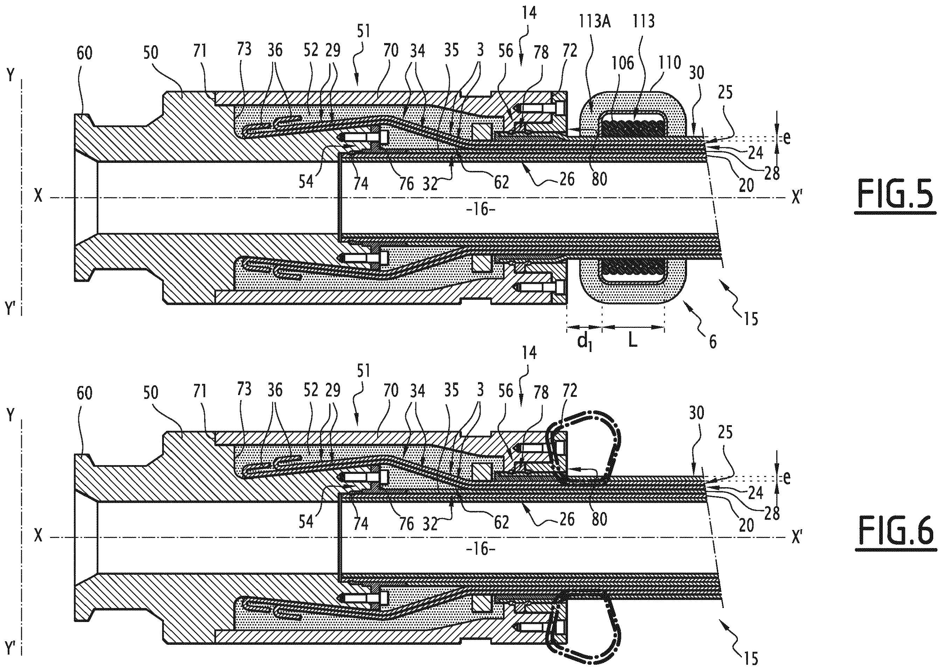

La figure 5 illustre un deuxième de mode de réalisation du module de magnétisation 6, dans lequel les éléments identiques au premier mode de réalisation, décrit précédemment, ne sont pas décrits à nouveau, seules les différences sont mises en évidence.

Dans ce deuxième mode de réalisation, le solénoïde 106 est propre à être disposé autour de la conduite flexible 2 à l'arrière de l'embout 14, mais sans contact avec l'embout 14.

Le circuit magnétique 110 est, dans ce cas, symétrique. Il comporte une partie transversale avant 113A obturant vers l'avant l'espace annulaire. De plus, le circuit magnétique 110 n'est pas en contact avec l'arrière de l'embout 14. Le circuit magnétique 110 est situé à une distance de l'ordre de 10 mm à 80 mm de l'arrière de l'embout 14.

Dans ce cas, lorsque le solénoïde 106 est traversé par un courant, le solénoïde 106 et le circuit magnétique 110 sont propres à engendrer deux pôles magnétiques, pour chaque élément métallique 3 situé au voisinage de l'arrière de l'embout 14.

En outre, la distance d₁ séparant le pôle magnétique avant, c'est-à-dire le pôle magnétique relativement plus proche de l'embout 14, est inférieure à la distance d₁ obtenue lors de la mise en oeuvre du premier mode de réalisation, pour une gaine externe de même épaisseur e, un même nombre de spires et le même courant injecté dans le solénoïde 106.

La distance d₁ est apte à être diminuée en ajustant le nombre de spires du solénoïde 106, l'intensité du courant injecté dans le solénoïde 106 ou encore en rapprochant le circuit magnétique 110 de l'arrière de l'embout 14.

Ainsi, ce deuxième mode de réalisation permet l'obtention, pour chaque élément métallique 3, d'un pôle magnétique situé au plus près de l'embout 14.

Le module de magnétisation 6 est propre à être monté de manière réversible à l'extérieur de la première partie de la conduite flexible 2, pour engendrer la magnétisation permanente des éléments métalliques 3 à l'aide d'un champ magnétique continu ou redressé.

Le module de magnétisation 6 est propre à être démonté une fois la magnétisation permanente obtenue, pour laisser place au module de mesure 8.

Comme visible sur la figure 7, le module de mesure 8 comprend un bloc capteur 114, propre à être monté en regard des éléments métalliques 3 magnétisés, et au moins un capteur 116 parmi lesquels se trouvent, au moins un capteur de mesure d'une composante axiale du champ magnétique, au moins un capteur de mesure d'une composante radiale du champ magnétique et optionnellement, un ou plusieurs capteurs de mesure de la composante circonférentielle du champ magnétique H (non représenté). Optionnellement, le module de mesure 8 comprend également un circuit de blindage magnétique 122.

Le bloc capteur 114 du module de mesure 8 est, par exemple, réalisé en matériau polymérique ou en métal amagnétique. Le bloc capteur 114 s'étend à l'extérieur des capteurs 116. Il est avantageusement monté de manière réversible à l'arrière de l'embout 14, à la place occupée par le module de magnétisation 6. Le bloc capteur 114 est ainsi traversé par les lignes de champ magnétique permanent.

De préférence, le module de mesure 8 comprend plusieurs capteurs 116 arrangés sur l'embout 14 suivant un réseau matriciel couvrant 360° angulairement. Dans ce cas, le module de mesure 8 comprend au moins plusieurs centaines de capteurs 116.

En variante, les capteurs 116 sont propres à être montés sur une sonde. La sonde est propre à assurer un balayage axial et angulaire du champ magnétique H engendré par les éléments métalliques 3.

Par exemple, le pas de mesure de la sonde est de l'ordre de 0,01 mm.

En référence à la figure 8, les capteurs 116 sont propres à mesurer la composante axiale Hₓ et la composante radiale H_{y} du champ magnétique H au niveau de différents points M de la conduite flexible 2 et de l'embout 14.

Les capteurs 116 sont par exemple des capteurs à effet Hall, des magnétodiodes, ou encore des magnétorésistances.

En outre, avantageusement, les capteurs 116 sont aussi propres à mesurer la composante circonférentielle du champ magnétique H.

Le circuit de blindage magnétique 122 est propre à recouvrir radialement vers l'extérieur le bloc capteur et les capteurs 116.

Le circuit de blindage magnétique 122 est propre à limiter l'influence de perturbations magnétiques externes qui viendraient fausser les mesures du champ magnétique H effectuées par les capteurs 116.

Le circuit de blindage magnétique 122 est réalisé, par exemple, en fer doux, en fer-silicium ou encore dans des matériaux à très haute perméabilité magnétique tels que les alliages Permimphy ou Mumétal.

Le module de mesure 8 est propre à être monté de manière réversible à l'extérieur de la première partie de la conduite flexible 2.

Le module de traitement 10 est propre à effectuer des traitements et des calculs sur les composantes du champ magnétique H obtenues au moyen du module de mesure 8.

Le module de traitement 10 comprend une unité de traitement 126.

L'unité de traitement 126 est propre à établir une cartographie du champ magnétique H engendré au niveau de l'embout 14 de la conduite flexible 2 à un instant donné.

L'unité de traitement 126 est également propre à calculer, à partir de la composante axiale Hₓ et de la composante radiale H_{y}, la norme du champ magnétique H et l'angle d'inclinaison α du champ magnétique H en un point donné de la conduite flexible 2. L'angle d'inclinaison α en un point M donné de la conduite flexible est, notamment, visible sur la figure 8.

L'unité de traitement 126 est également propre à établir, pour chaque élément métallique 3, les variations de l'une des composantes Hₓ, H_{y} du champ magnétique H, mesurée selon la direction Y-Y' à la verticale de l'un des pôles de l'élément métallique 3, en fonction du mouvement de l'élément métallique 3 le long de l'axe X-X'.

Un exemple de graphique illustrant l'évolution obtenue d'une composante est visible sur la figure 9. Ce graphique comprend trois courbes 132, 136, 140. La première courbe 132 représente l'une des composantes axiale Hₓ ou radiale H_{y} du champ magnétique H mesuré selon la direction Y-Y' à la verticale d'un pôle magnétique d'un élément métallique 3 lorsque la traction appliquée à l'embout 14 est minimale. La deuxième courbe 136 est établie dans les mêmes conditions que la courbe 132, à la différence que la traction appliquée à l'embout 14 est intermédiaire entre traction maximale et traction minimale. La troisième courbe 140 est établie dans les mêmes conditions que la courbe 132, à la différence que la traction appliquée à l'embout 14 est maximale. En se plaçant en un point X donné de l'axe X-X' sur la figure 9, par exemple en X₁, on repère les variations H₁, H₂, H₃ de la composante axiale Hₓ ou de la composante radiale H_{y} du champ magnétique H en fonction de la traction appliquée à l'embout 14 pour l'élément métallique 3 considéré.

L'unité de traitement 126 est propre à calculer l'amplitude A (visible sur la figure 9) du glissement axial d'un élément métallique 3 par rapport à l'embout 14 lors d'un cycle de tension appliqué à l'embout 14.

Pour que l'amplitude A soit calculée de façon suffisamment précise par l'unité de traitement 126, la résolution axiale du module de mesure 8 est avantageusement fine, par exemple de l'ordre de 0,01 mm.

En variante, l'unité de traitement 126 est propre à calculer l'amplitude A au moyen de techniques de filtrage et de lissage et/ou d'abaques faisant le lien entre la position des éléments métalliques 3 et les niveaux de champ magnétique H.

Une autre solution pour calculer l'amplitude A à partir des mesures effectuées est de modéliser par un dipôle magnétique chaque pôle magnétique d'un élément métallique 3, puis de programmer sur un calculateur un modèle capable de calculer le champ magnétique à partir de la position des différents pôles magnétiques, et enfin de déterminer l'amplitude A en faisant varier dans le modèle la position de chaque pôle magnétique jusqu'à minimiser l'écart entre le champ magnétique calculé par le modèle et celui mesuré par les capteurs 116.

L'unité de traitement 126 est propre à comparer les amplitudes A des glissements axiaux de différents éléments métalliques 3 dont les pôles sont situés à la même distance de l'arrière de l'embout 14.

L'unité de traitement 126 est propre à alerter un opérateur, par exemple, lorsque l'amplitude A du glissement axial d'un élément métallique 3 est supérieure de plus de 1 mm ou inférieure d'au moins 1 mm aux amplitudes A des glissements axiaux des éléments métalliques 3 voisins.

En variante de l'évolution représentée sur la figure 9, l'unité de traitement 126 est propre à établir une cartographie en deux dimensions représentant le champ magnétique H mesuré au niveau de l'embout 14 en fonction de la position angulaire et de la position selon la direction X-X' des éléments métalliques 3 de la conduite flexible 2.

Une telle cartographie en deux dimensions permet une comparaison aisée des mouvements des éléments métalliques 3 les uns par rapport aux autres et par là-même l'identification des éléments métalliques 3 se déplaçant de manière anormale par rapport aux autres éléments métalliques 3.

Un procédé de surveillance en service des éléments métalliques 3 au niveau des embouts de lignes flexibles tels que des conduites de flexibles, des câbles ou des ombilicaux, utilisant le nécessaire de surveillance va maintenant être décrit.

Le procédé de surveillance comprend une étape de fourniture d'une ligne flexible telle que la conduite flexible 2.

Comme décrit précédemment, la conduite flexible 2 comprend des éléments métalliques 3, tels que les éléments d'armure 29.

Le procédé de surveillance comprend ensuite une étape de démagnétisation des éléments métalliques 3 de la conduite flexible 2 situés au niveau de la zone arrière de l'embout 14.

L'étape de démagnétisation comprend la fourniture et le montage du module de démagnétisation 4.

Ceci comprend, par exemple, l'enroulement du câble du module de démagnétisation 4 autour de la conduite flexible 2 pour former le solénoïde 100.

L'étape de démagnétisation comprend ensuite l'injection d'un courant alternatif, par exemple de fréquence 50 Hertz, d'intensité décroissante dans le solénoïde 100 pendant une durée de quelques secondes. Typiquement, un courant alternatif d'intensité décroissante est injecté dans le solénoïde 100 pendant 10 secondes.

L'injection d'un tel courant alternatif d'intensité décroissante permet de faire décrire aux spires du solénoïde 100 des cycles d'hystérésis d'intensité décroissante.

Il est, par exemple, illustré sur la figure 3, les lignes de champ magnétique engendrées par le solénoïde 100 au cours de l'étape de démagnétisation.

Lors de l'étape de démagnétisation, l'intensité du courant initialement injecté dans le solénoïde 100 est ajustée pour que le champ magnétique H de départ engendré par le solénoïde 100 soit suffisant pour contrer la rémanence magnétique des éléments métalliques 3 de la ligne flexible 2.

Typiquement, l'intensité efficace du champ magnétique H de départ engendré par le solénoïde 100 lorsqu'il est traversé par le courant alternatif initial est de l'ordre de 4000 A/m pour contrer la rémanence magnétique des matériaux ferromagnétiques composant les éléments métalliques 3.

Par la suite, le champ magnétique H engendré par le solénoïde 100 traversé par le courant alternatif d'intensité décroissante décroît progressivement jusqu'à sa valeur nulle.

Le procédé de surveillance comprend ensuite une étape de retrait du module de démagnétisation 4.

Le procédé de surveillance comprend alors une étape de vérification de l'efficacité de la démagnétisation des éléments métalliques 3 de la conduite flexible 2.

L'étape de vérification est mise en oeuvre par un opérateur au moyen de l'appareil de mesure du champ magnétique.

L'étape de vérification comprend la fourniture de l'appareil de mesure du champ magnétique.

L'étape de vérification comprend ensuite la mesure du champ magnétique H à proximité de l'embout 14 et le contrôle du niveau de champ rémanent à la surface de la gaine externe 30.

Lors de l'étape de vérification, l'opérateur vérifie que le champ rémanent au niveau de la surface de la gaine externe 30 et de l'embout 14 est environ égal à zéro, en pratique d'intensité efficace inférieure à 50 A/m.

Si tel n'est pas le cas, l'étape de vérification est suivie d'une nouvelle étape de démagnétisation, identique à l'étape de démagnétisation, à la différence que le solénoïde 100 comporte un nombre plus important de spires et/ou que le courant alternatif initialement injecté dans le solénoïde 100 a une intensité plus élevé.

Ainsi, le champ magnétique H engendré par le solénoïde 100 est initialement plus élevé lors de la nouvelle étape de démagnétisation que lors de l'étape initiale de démagnétisation. Par exemple, l'intensité efficace du champ magnétique H engendré par le solénoïde 100 traversé par le courant alternatif est initialement de l'ordre 4000 A/m lors de l'étape initiale de démagnétisation et est de l'ordre de 6000 A/m lors de la nouvelle étape de démagnétisation.

Le procédé de surveillance comprend ensuite une étape de magnétisation des éléments métalliques 3 situés au niveau du premier tronçon 15 de la ligne flexible 2.

L'étape de magnétisation comprend la fourniture et le montage du module de magnétisation 6 de la ligne flexible 2. Ceci comprend l'enroulement du câble du module de magnétisation 6 autour de la conduite flexible 2 à l'arrière de l'embout 14 pour former le solénoïde 106.

L'étape de magnétisation comprend ensuite l'ajout du circuit magnétique 110 autour du solénoïde 106. Le circuit magnétique 110 est installé et cerclé autour du solénoïde 106 au moyen d'un collier de fixation ou de serrage.

L'étape de magnétisation comprend ensuite l'injection d'un courant de forte intensité dans le solénoïde 106 pendant quelques secondes. Typiquement, le courant est injecté pendant 5 à 10 secondes.

L'intensité du courant injecté dans le solénoïde 106 est de l'ordre de 100 A. Un tel courant est choisi parmi un courant continu, un courant redressé double alternance ou encore un courant redressé simple alternance.

L'intensité du courant injecté dans le solénoïde 106 est ajustée pour que le champ magnétique H engendré par le solénoïde 106 soit suffisant pour atteindre le coude de saturation magnétique des matériaux ferromagnétiques, tel que l'acier, constituant les éléments métalliques 3. Typiquement, l'intensité efficace du champ magnétique H engendré par le solénoïde 106 lorsqu'il est traversé par le courant injecté est de l'ordre de 2000A/m à 3500 A/m pour atteindre le coude de saturation magnétique de l'acier.

L'intensité du courant injectée est limitée de sorte que le champ magnétique H soit inférieur à un seuil de 4000 A/m En effet, un champ magnétique H d'intensité efficace supérieure à ce seuil pourrait créer des bouclages de champ magnétique extérieur aux éléments métalliques 3 et dégrader, ainsi, la qualité des pôles magnétiques des éléments métalliques 3 et la fiabilité des mesures ultérieures.

L'étape de magnétisation permet d'obtenir un champ magnétique rémanent sur chacun des éléments métalliques 3.

Ce champ magnétique rémanent présente, par exemple, une intensité efficace de l'ordre de 500 A/m à 1000 A/m au niveau des pôles magnétiques des élément métallique 3.

Dans un premier mode de réalisation, le solénoïde 106 et le circuit magnétique 110 sont en contact avec l'arrière de l'embout 14 de la conduite flexible 2.

Dans ce cas, lorsque le solénoïde 106 est traversé par un courant, le solénoïde 106 et le circuit magnétique 110 génèrent un seul pôle magnétique sur chacun des éléments métalliques 3 de la conduite flexible 2 situés au voisinage de l'arrière de l'embout 14. Le bouclage magnétique s'effectue au niveau de l'embout 14, à l'arrière de celui-ci.

Dans un deuxième mode de réalisation, le solénoïde 106 et le circuit magnétique 110 ne sont pas en contact avec l'arrière de l'embout 14 de la conduite flexible 2.

Dans ce cas, lorsque le solénoïde 106 est traversé par un courant, le solénoïde 106 et le circuit magnétique 110 génèrent deux pôles magnétiques sur chacun des éléments métalliques 3 de la conduite flexible 2 situés au voisinage de l'arrière de l'embout 14.

Dans les deux modes de réalisation décrits, la longueur du solénoïde 106 est au moins cinq fois supérieure à l'épaisseur e de la gaine externe 30 et, préférentiellement, plus de huit fois supérieure à l'épaisseur e de la gaine externe 30 de sorte à obtenir des pôles magnétiques de bonne qualité.

L'étape de magnétisation est effectuée à un moment où les éléments métalliques 3 ne bougent quasiment pas, c'est-à-dire pour une tension constante appliquée à l'embout 14 et une mer calme et plate.

Le procédé de surveillance comprend ensuite une étape de retrait du module de magnétisation 6 de la ligne flexible 2.

La figure 6 illustre une partie de la conduite flexible 2 et l'arrière de l'embout 14 après retrait du module de magnétisation 6.

Sur cette figure, on a représenté les lignes de champ magnétique rémanent engendrées par les éléments métalliques 3 de la conduite flexible 2.

Le procédé de surveillance comprend ensuite une étape de montage du module de mesure 8 du champ magnétique H pour le fixer le long de la conduite flexible 2.

L'étape de montage comprend la fourniture du module de mesure 8 du champ magnétique H.

L'étape de montage comprend ensuite la fixation des capteurs 116 du module de mesure 8 à l'arrière de l'embout 14 de la conduite flexible 2. Les capteurs 116 sont, par exemple, disposés suivant un réseau matriciel couvrant 360° angulairement.

En variante, les capteurs 116 sont disposés sur une sonde qui assure un balayage axial et/ou angulaire du champ magnétique H engendré par les éléments métalliques 3.

L'étape de montage comprend par la suite la fixation du bloc capteur 114 à l'arrière de l'embout 14 et à l'extérieur des capteurs 116.

L'étape de montage comprend, en outre, optionnellement la fixation du circuit de blindage magnétique 122 à l'arrière de l'embout 14 et à l'extérieur des capteurs 116 et du bloc capteur 114.

Le procédé de surveillance comprend ensuite une étape de mesure et de traitement du champ magnétique H engendré par les éléments métalliques 3 de la conduite flexible 2 au voisinage de l'embout 14.

L'étape de mesure et de traitement comprend la fourniture du module de traitement 10.

L'étape comprend la mesure par les capteurs 116 du module de mesure 8 d'au moins une composante du champ magnétique H engendré par les éléments métalliques 3 de la conduite flexible 2. Les composantes mesurées par le module de mesure 8 sont, notamment, les composantes axiale Hₓ, radiale H_{y} et avantageusement circonférentielle du champ magnétique H.

Le module de traitement 10 effectue ensuite des traitements et des calculs sur les composantes du champ magnétique H mesurées par le module de mesure 8.

En particulier, l'unité de traitement 126 établit pour chaque élément métallique 3 de la conduite flexible 2, les variations de l'une des composantes Hₓ, H_{y} du champ magnétique H mesuré selon la direction Y-Y' à la verticale de l'un des pôles d'un élément métallique 3 en fonction du mouvement de l'élément métallique 3 le long de l'axe X-X'.

Dans ce cas, l'unité de traitement 126 calcule l'amplitude A du glissement axial de l'élément métallique 3 par rapport à l'embout 14 au cours d'un cycle de tension subi par l'embout 14.

Optionnellement, l'unité de traitement 126 du module de traitement 10 établit une cartographie du champ magnétique H engendré au niveau de l'embout 14 de la conduite flexible 2 à un instant donné.

Optionnellement, l'unité de traitement 126 calcule à partir de l'une des composantes du champ magnétique H mesurée par le module de mesure 8, la norme du champ magnétique H et l'angle d'inclinaison α du champ magnétique H en point donné de la conduite flexible 2.

Le procédé de surveillance comprend ensuite une étape de détermination des déplacements axiaux des éléments métalliques 3 considérés.

Au cours de l'étape de détermination, l'unité de traitement 126 compare les amplitudes A des glissements axiaux de différents éléments métalliques 3 dont les pôles sont situés à une même distance de l'arrière de l'embout 14.

L'unité de traitement 126 alerte ensuite un opérateur lorsque l'amplitude A du glissement axial d'un élément métallique 3 est supérieur de plus de 1 mm aux amplitudes A des glissements axiaux des éléments métalliques 3 voisins.

Ainsi, le procédé de surveillance permet de détecter a postériori un déplacement anormal d'un élément métallique 3, tel qu'un élément d'armure 29, de la conduite flexible 2. En effet, sous l'effet de la tension appliquée à l'embout 14, les éléments métalliques 3 se déplacent axialement par rapport au corps de l'embout 14, ce déplacement axial étant une fonction croissante de la tension appliquée à l'embout 14. Après comparaison des amplitudes A des glissements axiaux de différents éléments métalliques 3, un opérateur est capable de détecter un déplacement anormal d'un élément métallique 3 le long de la conduite flexible 2. Ainsi, il est possible de détecter une rupture, une sollicitation anormale, ou encore un mauvais ancrage dans l'embout 14 de cet élément métallique 3.

De plus, les mesures d'amplitudes A des glissements axiaux, effectuées au cours du procédé de surveillance sont réutilisables en compléments de données fournissant en temps réel la tension moyenne appliquée à la conduite flexible 2. De ce fait, il est possible de s'assurer de l'absence d'anomalie et d'endommagement du système d'ancrage de la conduite flexible 2.

Le procédé de surveillance présente donc l'avantage de détecter des ruptures d'éléments métalliques 3 à posteriori, ce qui n'était pas le cas de méthodes de détection basées sur l'émission acoustique. En effet, les méthodes de détection basées sur l'émission acoustique ne permettent de détecter que des ruptures passées d'éléments métalliques 3.

De plus, la disposition des capteurs suivant un réseau matriciel couvrant 360° angulairement permet de cartographier l'intégralité du champ magnétique H émis par les éléments métalliques 3 de la conduite flexible 2.

De même, lorsque les capteurs 116 sont montés sur une sonde, le pas de balayage ou de scannage de la sonde est ajustable de manière suffisamment fine pour cartographier l'intégralité du champ magnétique H émis par les éléments métalliques 3 de la conduite flexible 2.

Le procédé de surveillance offre, également, la possibilité d'engendrer un ou plusieurs pôles magnétiques sur chacun des éléments métalliques 3 d'une conduite flexible 2 en fonction de la position du module de magnétisation 6 par rapport à l'arrière de l'embout 14 de la conduite flexible 2.

Le procédé de surveillance utilise les propriétés des matériaux ferromagnétiques, tels que celles des aciers au carbone fortement écrouis et présentant des caractéristiques mécaniques élevées. De tels aciers composant les éléments métalliques 3 engendrent un champ rémanent accru au niveau des pôles magnétiques des éléments métalliques 3. En effet, de tels matériaux ferromagnétiques présentent un champ coercitif et une induction rémanente relativement importante. En conséquence, un champ rémanent accru permet de faciliter la détection et la localisation des pôles magnétiques des éléments métalliques 3 malgré l'entrefer lié à la présence de la gaine externe 30. Il est entendu par « entrefer », une coupure dans un circuit magnétique.

En outre, le phénomène de vieillissement magnétique des aimants permanents est négligeable lors de la mise en oeuvre du procédé de surveillance. Il est entendu par « vieillissement magnétique » la perte progressive de l'aimantation des aimants permanents dès lors qu'ils sont soumis à une température se rapprochant excessivement de leur température de Curie. Il est entendu par « température de Curie », la température à laquelle un matériau perd son aimantation.

En effet, le phénomène de vieillissement magnétique est négligeable lorsque la température de l'élément métallique aimanté est inférieure à la température de Curie moins 250°C. Or, les aciers utilisés pour constituer les éléments métalliques 3, tels que les fils d'armures, ont une température de Curie aux alentours de 770 °C, ce qui est très supérieur à la température maximale dans une conduite flexible qui est de l'ordre de 130°C.

Le procédé de surveillance est, également, de coût réduit dans la mesure où les capteurs 116, notamment les capteurs à effet Hall, sont des composants peu coûteux.

Le procédé de surveillance est, également, non intrusif dans la mesure où les différentes étapes du procédé de surveillance sont mises en oeuvre à l'extérieur de la conduite flexible 2. En conséquence, le procédé de surveillance est de mise en oeuvre aisée sans modification structurelles de la conduite flexible 2 et sans arrêt important de la production. En particulier, il n'est pas nécessaire de modifier la structure de la ligne flexible, ni de la requalifier, puisque la magnétisation s'effectue sur des éléments métalliques 3 déjà présents classiquement dans la conduite flexible 2.

Enfin, le procédé de surveillance est adapté pour être mis en oeuvre sur des conduites anciennes et déjà en service.

## Revendications

1. Procédé de surveillance en service d'éléments métalliques d'une ligne flexible telle qu'une conduite flexible, un câble ou un ombilical, comprenant les étapes suivantes :
- fourniture d'une ligne flexible (2) comportant des éléments métalliques magnétisables (3),
- magnétisation de chaque élément métallique (3) situé sur un tronçon (15) de la ligne flexible (2) pour engendrer un champ magnétique rémanent sur chaque élément métallique (3),
- montage d'un module de mesure (8) d'un champ magnétique (H) autour du tronçon (15), et
- détermination d'un déplacement axial (A) de chacun des éléments métalliques (3) à partir du champ magnétique (H) mesuré.

2. Procédé de surveillance selon la revendication 1, comprenant, avant l'étape de magnétisation, une étape de démagnétisation de la ligne flexible (2).

3. Procédé de surveillance selon la revendication 1 ou 2, dans lequel l'étape de magnétisation comprend l'enroulement d'un solénoïde (106) autour de la ligne flexible (2), la disposition d'un circuit magnétique (110) autour du solénoïde (106), puis la circulation d'un courant dans le solénoïde (106).

4. Procédé de surveillance selon la revendication 3, dans lequel lors de l'étape de magnétisation, le circuit magnétique (110) est disposé autour du solénoïde (106) de sorte à engendrer un seul pôle magnétique sur chaque élément métallique (3).

5. Procédé de surveillance selon la revendication 3, dans lequel lors de l'étape de magnétisation, le circuit magnétique (110) est disposé autour du solénoïde (106) de sorte à engendrer deux pôles magnétiques sur chaque élément métallique (3).

6. Procédé de surveillance selon l'une quelconque des revendications précédentes, dans lequel le module de mesure (8) comprend des capteurs (116) choisi parmi des capteurs à effet Hall, des magnétodiodes et des magnétorésistances.

7. Procédé de surveillance selon la revendication 6, dans lequel les capteurs (116) du module de mesure (8) sont arrangés suivant un réseau matriciel couvrant 360° angulairement.

8. Procédé de surveillance selon la revendication 6, dans lequel les capteurs (116) du module de mesure (8) sont disposés sur une sonde, la sonde se déplaçant axialement et/ou angulairement sur la ligne flexible (2).

9. Procédé de surveillance selon l'une quelconque des revendications précédentes, dans lequel le module de mesure (8) comprend au moins un circuit de blindage magnétique (122) disposé à l'extérieur des éléments magnétiques (3) lors de l'étape de montage.

10. Procédé de surveillance selon l'une quelconque des revendications précédentes, comprenant, lors de l'étape de détermination, une étape de mesure de l'évolution d'au moins une composante axiale, radiale ou circonférentielle du champ magnétique (H) engendré le long de la ligne flexible (2).

11. Procédé de surveillance selon l'une quelconque des revendications précédentes, comprenant une étape d'établissement d'une cartographie du champ magnétique (H) engendré le long de la ligne flexible (2) à un instant donné.

12. Procédé de surveillance selon l'une quelconque des revendications précédentes, comprenant, lors de l'étape de détermination, une étape de comparaison du déplacement axial (A) d'un premier élément métallique (3) par rapport à un deuxième élément métallique (3).

13. Procédé de surveillance selon l'une quelconque des revendications précédentes, dans lequel la ligne flexible (2) comprend un embout (14) relié au tronçon (15) de ligne flexible (2), et lors de l'étape de montage, le module de mesure (8) est fixé au voisinage de l'embout (14).

14. Procédé de surveillance selon l'une quelconque des revendications précédentes, dans lequel les éléments métalliques (3) sont des éléments d'armure (29) tels que des fils d'armures.

15. Nécessaire de surveillance en service d'éléments métalliques (3) d'une ligne flexible (2) telle qu'une conduite flexible, un câble ou un ombilical, comprenant :
- un module de magnétisation (6) de chaque élément métallique (3) propre à être disposé de manière amovible sur un tronçon (15) de la ligne flexible (2), le module de magnétisation (6) étant propre à engendrer un champ magnétique rémanent sur chaque élément métallique (3),
- un module de mesure (8) d'un champ magnétique (H) propre à être disposé autour du tronçon (15), à la place du module de magnétisation (6), et
- un module de détermination (10) d'un déplacement axial (A) de l'élément métallique (3) à partir du champ magnétique (H) mesuré.

## Patentansprüche

1. Verfahren zur Überwachung im Betrieb von Metallelementen einer flexiblen Leitung, wie z.B. einer flexiblen Rohrleitung, eines Kabels oder eines Seils, aufweisend die folgenden Schritte:
- Bereitstellung einer flexiblen Leitung (2), die magnetisierbare Metallelemente (3) aufweist,
- Magnetisieren jedes Metallelements (3), das an einem Abschnitt (15) der flexiblen Leitung (2) angeordnet ist, zum Erzeugen eines remanenten Magnetfelds an jedem Metallelement (3),
- Montieren eines Moduls zum Messen (8) eines Magnetfelds (H) um den Abschnitt (15) herum,
- Ermitteln einer Axialverlagerung (A) jedes der Metallelemente (3) ausgehend von dem gemessenen Magnetfeld (H).

2. Verfahren zur Überwachung gemäß Anspruch 1, aufweisend, vor dem Schritt des Magnetisierens, einen Schritt des Entmagnetisierens der flexiblen Leitung (2).

3. Verfahren zur Überwachung gemäß Anspruch 1 oder 2, wobei der Schritt des Magnetisierens aufweist das Wickeln einer Spule (106) um die flexible Leitung (2), das Anordnen eines magnetischen Kreises (110) um die Spule (106) und dann das Fließen-lassen eines Stroms in der Spule (106).

4. Verfahren zur Überwachung gemäß Anspruch (3), wobei während des Schritts des Magnetisierens der magnetische Kreis (10) um die Spule (106) herum angeordnet ist, um einen einzigen magnetischen Pol an jedem Metallelement (3) zu erzeugen.

5. Verfahren zur Überwachung gemäß Anspruch 3, wobei während des Schritts des Magnetisierens der magnetische Kreis (10) um die Spule (106) herum angeordnet ist, um zwei magnetische Pole an jedem Metallelement (3) zu erzeugen.

6. Verfahren zur Überwachung gemäß irgendeinem der vorhergehenden Ansprüche, wobei das Modul zum Messen (8) Sensoren (116) aufweist, die ausgewählt sind aus Hall-, Magnetodiode- und Magnetowiderstand-Sensoren.

7. Verfahren zur Überwachung gemäß Anspruch 6, wobei die Sensoren (116) des Moduls zum Messen (8) entlang eines Matrizennetzes angeordnet sind, das 360° winkelabdeckend ist.

8. Verfahren zur Überwachung gemäß Anspruch 6, wobei die Sensoren (116) des Moduls zum Messen (8) an einer Sonde angeordnet sind, wobei die Sonde sich an der flexiblen Leitung (2) axial- und/oder winkel-verlagert.

9. Verfahren zur Überwachung gemäß irgendeinem der vorhergehenden Ansprüche, wobei das Modul zum Messen (8) aufweist wenigstens einen Magnetschutzkreis (122), der auf der Außenseite der Magnetelemente (3) angeordnet ist während des Schritts des Montierens.

10. Verfahren zur Überwachung gemäß irgendeinem der vorhergehenden Ansprüche, aufweisend, während des Schritts des Ermittelns, einen Schritt des Messens der Entwicklung wenigstens einer von einer axialen, radialen oder umfänglichen Komponente des Magnetfelds (H), das entlang der flexiblen Leitung (2) erzeugt wird.

11. Verfahren zur Überwachung gemäß irgendeinem der vorhergehenden Ansprüche, aufweisend einen Schritt des Erstellens einer Kartografie des Magnetfelds (H), das entlang der flexiblen Leitung (2) erzeugt wird, in einem gegebenen Augenblick.

12. Verfahren zur Überwachung gemäß irgendeinem der vorhergehenden Ansprüche, aufweisend, während des Schritts des Ermittelns, einen Schritt des Vergleichens der axialen Verlagerung (A) eines ersten Metallelements (3) bezüglich eines zweiten Metallelements (3).

13. Verfahren zur Überwachung gemäß irgendeinem der vorhergehenden Ansprüche, wobei die flexible Leitung (2) ein Ansatzstück (14) aufweist, das mit dem Abschnitt (15) der flexiblen Leitung (2) verbunden ist, und wobei während des Schritts des Montierens das Modul zum Messen (8) benachbart zu dem Ansatzstück (14) befestigt ist.

14. Verfahren zur Überwachung gemäß irgendeinem der vorhergehenden Ansprüche, wobei die Metallelemente (3) Verstärkungselemente (29) sind, wie z.B. Verstärkungsfäden.

15. Zeug zur Überwachung im Betrieb von Metallelementen (3) einer flexiblen Leitung (2), wie z.B. einer flexiblen Rohrleitung, eines Kabels oder eines Seils, aufweisend:
- ein Modul zum Magnetisieren (6) von jedem Metallelement (3), das imstande ist, an einem Abschnitt (15) der flexiblen Leitung (2) bewegbar angeordnet zu sein, wobei das Modul zum Magnetisieren (6) imstande ist, ein remanentes Magnetfeld an jedem Metallelement (3) zu erzeugen,
- ein Modul zum Messen (8) eines Magnetfelds (H), das imstande ist, um den Abschnitt (15) herum angeordnet zu sein an der Stelle des Moduls zum Magnetisieren (6), und
- ein Modul zum Ermitteln (10) einer Axialverlagerung (A) des Metallelements (3) ausgehend von dem gemessenen Magnetfeld (H) .

## Claims

1. In-service surveillance method for metallic elements of a flexible line, such as a flexible duct, a cable or an umbilical line, comprising the following steps:
- providing a flexible line (2) comprising magnetisable metallic elements (3),
- magnetising each metallic element (3) situated on a section (15) of the flexible line (2) in order to generate a residual magnetic field on each metallic element (3),
- mounting a module (8) for measuring a magnetic field (H) around the section (15), and
- determining an axial displacement (A) of each of the metallic elements (3) from a measured magnetic field (H).

2. Surveillance method according to claim 1, comprising, before the magnetisation step, a step of demagnetising the flexible line (2).

3. Surveillance method according to claim 1 or 2, in which the magnetisation step comprises winding up a solenoid (106) around the flexible line (2), arrangement of a magnetic circuit (110) around the solenoid (106), then circulation of a current in the solenoid (106).

4. Surveillance method according to claim 3, in which, during the magnetisation step, the magnetic circuit (110) is disposed around the solenoid (106) so as to generate a single magnetic pole on each metallic element (3).

5. Surveillance method according to claim 3, in which, during the magnetisation step, the magnetic circuit (110) is disposed around the solenoid (106) so as to generate two magnetic poles on each metallic element (3).

6. Surveillance method according to any of the preceding claims, in which the measuring module (8) comprises sensors (116) chosen from Hall-effect sensors, magnetodiodes and magnetoresistors.

7. Surveillance method according to claim 6, in which the sensors (116) of the measuring module (8) are arranged according to a matrix network covering 360° angularly.

8. Surveillance method according to claim 6, in which the sensors (116) of the measuring module (8) are disposed on a probe, the probe being displaced axially and/or angularly on the flexible line (2).

9. Surveillance method according to any of the preceding claims, in which the measuring module (8) comprises at least one magnetic shielding circuit (122) which is disposed outside the magnetic elements (3) during the mounting step.

10. Surveillance method according to any of the preceding claims, comprising, during the determination step, a step of measuring the development of at least one axial, radial or circumferential component of the magnetic field (H) which is generated along the flexible line (2).

11. Surveillance method according to any of the preceding claims, comprising a step of establishing a map of the magnetic field (H) which is generated along the flexible line (2) at a given moment.

12. Surveillance method according to any of the preceding claims, comprising, during the determination step, a step of comparing the axial displacement (A) of a first metallic element (3) relative to a second metallic element (3).

13. Surveillance method according to any of the preceding claims, in which the flexible line (2) comprises a connection piece (14) connected to the section (15) of flexible line (2) and, during the mounting step, the measuring module (8) is fixed in the vicinity of the connection piece (14).

14. Surveillance method according to any of the preceding claims, in which the metallic elements (3) are armoured elements (29), such as armoured wires.

15. Kit for in-service surveillance of metallic elements (3) of a flexible line (2), such as a flexible duct, a cable or an umbilical line, comprising:
- a module (6) for magnetising each metallic element (3) which is able to be disposed movably on a section (15) of the flexible line (2), the magnetisation module (6) being able to generate a residual magnetic field on each metallic element (3),
- a module (8) for measuring a magnetic field (H) which is able to be arranged around the section (15), at the position of the magnetisation module (6), and
- a module (10) for determining an axial displacement (A) of the metallic element (3) from the measured magnetic field (H).
